Europäisches Patentamt

European Patent Office

Office européen des brevets

(19)

(11) Veröffentlichungsnummer: **0 016 954**
**A1**

## (12) EUROPÄISCHE PATENTANMELDUNG

(21) Anmeldenummer: 80100899.6

(22) Anmeldetag: 25.02.80

(51) Int. Cl.³: **F 16 F 9/36**

(30) Priorität: 31.03.79 DE 2912902

(43) Veröffentlichungstag der Anmeldung: 15.10.80
Patentblatt 80/21

(84) Benannte Vertragsstaaten: **AT BE FR GB IT NL SE**

(71) Anmelder: **Firma August Bilstein,
D-5828 Ennepetal-Altenvoerde (DE)**

(72) Erfinder: **de Baan, Johannes J., Peddenöderstrasse 2,
D-5828 Ennepetal-Rüggeberg (DE)**
Erfinder: **Hausmann, Erwin, Am Opphof 12,
D-5600 Wuppertal-Elberfeld (DE)**
Erfinder: **Adrian, Adolf, Altenloher Weg 17,
D-5828 Ennepetal 13 (DE)**

(74) Vertreter: **Sturies, Herbert et al, Patentanwälte Dr. Ing.
Dipl. Phys. Herbert Sturies Dipl. Ing. Peter Eichler
Postfach 20 12 42, D-5600 Wuppertal 2 (DE)**

(54) **Hydropneumatischer Zweirohr-Schwingungsdämpfer, insbesondere als Vorderachsbein für Kraftfahrzeuge.**

(57) Hydropneumatische Zweirohr-Schwingungsdämpfer sind mit einem die Dämpfungsflüssigkeit sowie den Arbeitskolben (9) und die Kolbenstange (7) enthaltenden Innenzylinderrohr (5) sowie mit einem, teilweise mit Dämpfungsflüssigkeit und Druckgas gefüllten Außenzylinderrohr (3) versehen. Beide Zylinder (3, 5) sind unten über ein Bodenventil (10) und oben über ein Verschlußpaket (14) miteinander verbunden, das die Kolbenstangendichtung (17) und eine darunter gelegene Entlüftungseinrichtung für das Innenzylinderrohr (5) mit zum oberen Ende des Außenzylinderrohres (3) führendem Entlüftungskanal enthält.

Um mit baulich einfachen und leicht zu montierenden Mitteln eine dauerhaft zuverlässige Entlüftung zu erreichen, besteht die Entlüftungseinrichtung aus einem gas- und flüssigkeitsdurchlässigen Porenkörper (19) mit hinreichendem Durchflußwiderstand, vorzugsweise aus einer Sinterringscheibe (19), insbesondere aus Sintereisen.

0016954

Firma August Bilstein, 5828 Ennepetal 13

======================================================

Hydropneumatischer Zweirohr-Schwingungsdämpfer, insbesondere als Vorderachsbein für Kraftfahrzeuge

Die Erfindung bezieht sich auf einen hydropneumatischen Zweirohr-Schwingungsdämpfer, insbesondere als Vorderachsbein für Kraftfahrzeuge, mit einem Dämpfungsflüssigkeit enthaltenden Innenzylinder, einem damit über ein Bodenventil verbundenen, teilweise mit Dämpfungsflüssigkeit und Druckgas gefüllten Außenzylinder, einer im Innenzylinder geführten Kolbenstange mit daran vorhandenem Arbeitskolben und einem an den oberen Zylinderrohrenden vorgesehenen Verschlußpaket für den Kolbenstangendurchtritt mit Kolbenstangenabdichtung und einer darunter angeordneten Entlüftungseinrichtung mit zum oberen Ende des Außenzylinders führendem Entlüftungskanal. Die vorerwähnte Entlüftungseinrichtung sorgt dafür, daß etwaiges sich insbesondere während des Nichtbetriebszustandes des Schwingungsdämpfers oder des Fahrzeuges unterhalb der Kolbenstangendichtung ansammelndes Gas bei Inbetriebnahme des Schwingungsdämpfers bzw. des Kraftfahrzeuges durch die Hubbewegungen des Dämpfers alsbald zum Druckgasraum im Außenzylinder gefördert wird, so daß ein Entweichen des Druckgases über die Kolbenstangenabdichtung nach außen vermieden wird und der Innenzylinder-Arbeitsraum gas- bzw. luftblasenfrei bleibt und darin demzufolge keine das Dämpfungsverhalten beeinträchtigende Flüssigkeitsschaumbildung auftritt.

Hydropneumatische Zweirohr-Schwingungsdämpfer obiger Art sind bekannt. Bei ihnen besteht die vorerwähnte Entlüftungseinrichtung aus einem zwischen dem unterhalb der Kolbenstangenabdichtung gelegenen Ringraum und dem zum Druckgasraum des Außenzylinders führenden Entlüftungskanal gelegenen Rückschlagventil, das entweder als federbeaufschlagte Ventilkugel oder aber als ringförmige Gummimanschette ausgebildet ist. Diese Rückschlagventile werden beim jeweiligen Ausfahrhub der Kolbenstange durch den dabei unterhalb der Kolbenstangenabdichtung auftretenden Druckanstieg geöffnet, so daß dann etwaiges Druckgas und auch Dämpfungsflüssigkeit über den Entlüftungskanal zum Druckgasraum des Arbeitszylinders gelangt, wohingegen die Rückschlagventile bei der jeweiligen Einfahrbewegung der Kolbenstange schließen und dadurch einen entsprechenden Gasrückstrom zur Kolbenstangendichtung hin verhindern. Da diese vorerwähnten Rückschlagventile notwendigerweise aus federbelasteten bzw. in sich federnden mechanisch bewegten Teilen bestehen, kommt es hier nach längerer Betriebs-

dauer zwangläufig zu entsprechenden Ermüdungserscheinungen der Rückschlagventile, wodurch ihre Funktionsbrauchbarkeit nachläßt und die mit ihnen angestrebte Entlüftung nicht im gewünschtem Umfang mehr erreicht wird. Auch bedingt der Einbau solcher Rückschlagventile in das Verschlußpaket des Schwingungsdämpfers einen nicht unerheblichen Montagemehraufwand.

Der Erfindung liegt die Aufgabe zugrunde, einen hydro-pneumatischen Zweirohr-Schwingungsdämpfer der gattungsge-mäßen Art zu schaffen, dessen Entlüftungseinrichtung einfacher beschaffen ist, leichter zu montieren ist und eine dauerhaft zuverlässige Entlüftung gewährleistet. Diese Aufgabe wird erfindungsgemäß dadurch gelöst, daß die Entlüftungseinrichtung aus einem gas- und flüssigkeitsdurchlässigen Porenkörper mit hinreichendem Durchflußwiderstand besteht. Vorteilhaft besteht der Porenkörper aus Sinterwerkstoff, insbesondere aus Sintereisen. Überraschenderweise hat sich gezeigt, daß ein solcher Porenkörper trotz seiner grundsätzlich in beiden Richtungen bestehenden Gas- und Flüssigkeitsdurchlässigkeit bei seiner erfindungsgemäßen Einbau- bzw. Verwendungsweise einen Gas- und Flüssigkeitsdurchtritt lediglich in der gewünschten einsinnigen Richtung, also während des jeweiligen Kolbenstangen-Ausfahrhubes ermöglicht, mithin wie ein Rückschlagventil arbeitet. Das hängt offenbar mit den entsprechenden, durch die Arbeitskolbenventile und insbesondere auch durch das Bodenventil gesteuerten

- 4 -                    0016954

wechselnden Druckverhältnissen im Dämpfer zusammen. Überraschend ist weiterhin, daß sich der erfindungsgemäße Porenkörper auch nach längerer Betriebsdauer nicht etwa durch in der Dämpfungsflüssigkeit vorhandene Verunreinigungen zusetzt bzw. verstopft wird. Selbst bei Verwendung von verunreinigtem Altöl als Dämpfungsflüssigkeit konnten derartige Verstopfungserscheinungen bzw. ein Nachlassen der Funktionstüchtigkeit des aus Sintereisen bestehenden Porenkörpers nicht beobachtet werden. Offenbar ist das auf die bei der Dämpferarbeit im Porenkörper ständig auftretenden Pulsationswechsel der Dämpfungsflüssigkeit und die dadurch hervorgerufene Selbstreinigungswirkung des Porenkörpers zurückzuführen.

Nach einem weiteren besonders vorteilhaften Merkmal der Erfindung besteht der Porenkörper aus einer Sinterringscheibe, die in eine unmittelbar unterhalb der Kolbenstangenabdichtung gelegene Aufnahmetasche einer unteren Verschlußpaketscheibe eingelegt ist, die die oberen Zylindergehäuserohrenden miteinander verbindet und den Entlüftungskanal in Form einer axialen Rücklaufbohrung enthält, die oberhalb der Sinterringscheibe von der Aufnahmetasche abzweigt. Eine solche Sinterringscheibe ist leicht herzustellen und zu montieren, wobei durch ihre Unterbringung in der Aufnahmetasche unterhalb der von letzterer abzweigenden Rücklaufbohrung sichergestellt wird, daß die Sinterringscheibe praktisch immer von in der Aufnahme-

tasche vorhandener Dämpfungsflüssigkeit umgeben ist. Dadurch kann die Sinterringscheibe ihre angestrebte Entlüftungsfunktion voll entfalten, indem sie den gewünschten einsinnigen Gas- und Flüssigkeitsdurchtritt immer nur von dem unterhalb der Kolbenstangendichtung gelegenen Ringraum zum Druckgasraum des Arbeitszylinders und nicht etwa auch in umgekehrter Richtung ermöglicht.

Weiterhin sieht die Erfindung vor, daß in geringem Abstand oberhalb der die Sinterringscheibe aufnehmenden Verschlußpaketscheibe ein L-förmig profilierter Verschlußring angeordnet ist, der außen über einen Dichtungsring auf der Verschlußpaketscheibe aufliegt und mit seinem inneren, axial nach unten abgewinkelten Teil einen die Kolbestangenabdichtung bildenden Dichtlippenring umgreift und stirnseitig auf der Sinterringscheibe aufliegt. Hierdurch kommt man zu einer einfachen Montage und Halterung der Sinterringscheibe bei gleichzeitiger Gewährleistung ihrer radial von innen nach außen erfolgenden Gas- bzw. Flüssigkeitsdurchströmung.

In der Zeichnung sind zwei Ausführungsbeispiele der Erfindung dargestellt. Dabei zeigt

Fig. 1 einen entsprechend beschaffenen hydropneumatischen Zweirohr-Schwingungsdämpfer in senkrechtem Längsschnitt und

Fig. 2 einen entsprechenden Schnitt durch eine zweite Ausführungsform.

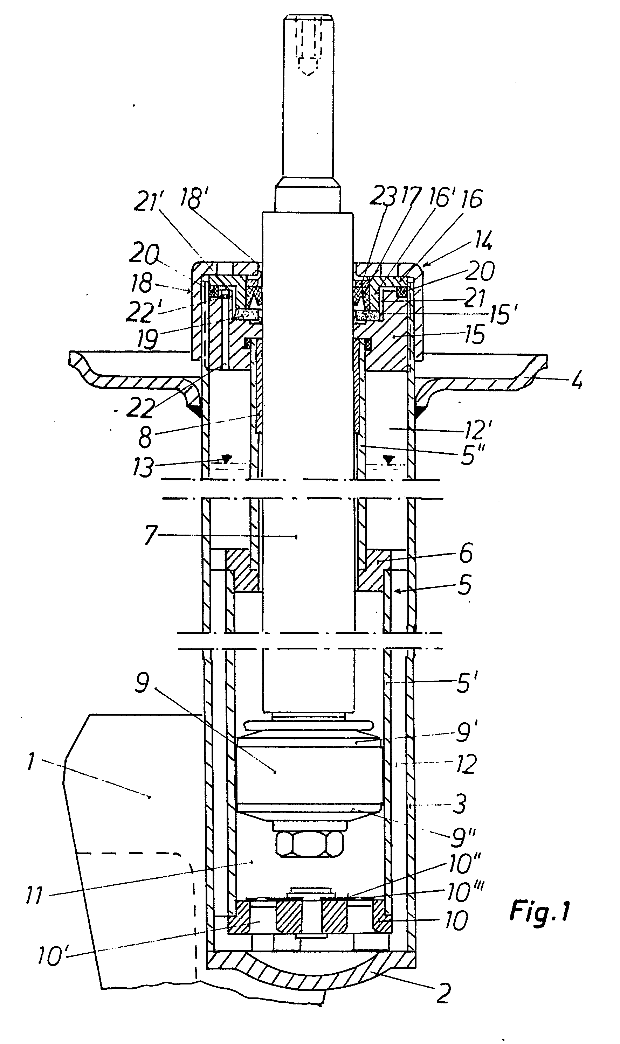

Der in Fig. 1 abgebildete, als Vorderachsbein für Kraftfahrzeuge dienende Zweirohr-Schwingungsdämpfer besitzt ein mit der Radachsaufhängung 1 fest verbundenes, mit einem Boden 2 versehenes äußeres Zylinderrohr 3, an dessen oberem Ende ein Federteller 4 für die sich daran abstützende, nicht dargestellte Tragfeder angeschweißt ist. Konzentrisch zum Außenzylinderrohr 3 ist das im vorliegenden Fall zweigeteilte Innenzylinderrohr 5 angeordnet, das aus dem unteren Rohrabschnitt 5' und dem damit über den im äußeren Rohr 3 eingebauten Ringsteg 6 fest verbundenen oberen Rohrabschnitt 5'' besteht, der einen geringeren Durchmesser als der untere Rohrabschnitt 5' aufweist und die Kolbenstange 7 in geringem Abstand umgreift. Zu deren Führung dient die in das obere Ende des Innenzylinderrohrabschnitts 5'' eingesetzte Führungsbüchse 8 aus entsprechend gleitreibungsminderndem Werkstoff. Am unteren Ende der Kolbenstange 7 ist der Arbeitskolben 9 befestigt, der im unteren Teil 5' des Innenzylinderohres 5 geführt ist. Dieser Arbeitskolben 9 ist in bekannter Weise mit durch Ventilfederscheiben 9',9'' gesteuerten Dämpfungsflüssigkeitsbohrungen versehen, wobei die Ventilscheiben 9' während des jeweiligen Einfahrhubes der Kolbenstange 7 und die Ventilscheiben 9'' während der jeweiligen Ausfahrbewegungen der Kolbenstange wirksam werden, d.h. sich dabei jeweils von den durch sie gesteuerten Kolbenbohrungsmündungen abheben.

In das untere Ende des Innenzylinderrohrteiles 5' ist das Bodenventil 10 eingebaut, das Ventilbohrungen 10' sowie

eine oder mehrere letztere abdeckende Ventilfederscheiben 10'' mit Permanentdurchlässen 10''' besitzt. Dieses Bodenventil 10 verbindet den mit Dämpfungsflüssigkeit, insbesondere Dämpfungsöl gefüllten inneren Arbeitszylinder 11 mit dem zwischen den beiden Zylinderrohren 3,5 gelegenen ringförmigen Außenzylinder 12, der in seinem unteren Teil ebenfalls mit Dämpfungsflüssigkeit, dagegen in seinem oberen Teil 12' mit Druckgas, insbesondere Druckluft oder Stickstoff von beispielsweise 5 bar Druck, gefüllt ist, das mit der Dämpfungsflüssigkeit eine freie Grenzfläche 13 besitzt.

Am oberen, den Kolbenstangendurchtritt aufweisenden Ende ist der Zweirohr-Schwingungsdämpfer mit einem generell mit 14 bezeichneten Verschlußpaket versehen, das aus der unteren, die beiden Enden der Zylinderrohre 3,5'' fest miteinander verbindenden Verschlußpaketscheibe 15, dem L-förmig profilierten Verschlußring 16, dem die Kolbenstangenabdichtung bildenden Dichtlippenring 17 und der Verschlußkappe 18 besteht, die die Kolbenstangendurchtrittsbohrung 18' aufweist und das obere Ende des Außenrohres 3 umgreift sowie damit verschraubt ist.

Die untere Verschlußpaketscheibe 15 ist mit einer Aufnahmetasche 15' versehen, in die die aus Sintereisen bestehende Ringscheibe 19 eingelegt ist. Diese befindet sich unmittelbar unterhalb des Dichtlippenringes 17 und wird durch den inneren, axial nach unten verlaufenden Teil 16' des Verschlußringes 16 gehalten, der sich außen über den Dichtungsring 20 auf der Verschlußpaketscheibe 15 abstützt. Zwischen der Paketscheibe und dem Verschlußring 16 entsteht dadurch ein L-förmig profilierter Ringkanal 21, der gleichsam die Fortsetzung der Aufnahmetasche 15' bildet. Vom oberen Teil 21' dieses Ringkanals zweigt die zum Druckgasraum 12' des Außenzylinders führende Rücklaufbohrung 22 ab, in deren oberen Teil noch eine den Durchtrittquerschnitt mindernde Lochblende 22' eingesetzt ist. Der Dichtlippenring 17 wird oben durch einen Stützring 23 gehalten.

Vor allem nach längerer Nichtgebrauchsdauer des Schwingungsdämpfers kommt es regelmäßig zu Gasabsonderungen der mit dem Druckgas in unmittelbarem Verbindungsaustausch stehenden Dämpfungsflüssigkeit auch innerhalb des Arbeitszylinders 11, wobei sich das Gas im oberen Raum unterhalb der Kolbenstangendichtung 17 ansammelt. Sobald aber der Schwingungsdämpfer bzw. das Fahrzeug in Betrieb genommen wird, kommt es bei der jeweiligen Ausfahrbewegung der Kolbenstange 7 zu einem entsprechenden Gas- und Flüssigkeitsdurchtritt durch die Sinterringscheibe 19, wobei zunächst regelmäßig nur ein entsprechender Gasdurchtritt erfolgt. Über den Ringkanal 21 und den Rückflußkanal 22 gelangt dieses Gas direkt in den Druckgasraum 12', bis der unterhalb der Dichtung 17 vorhandene Ringraum praktisch gasfrei ist, so daß dann nur noch Dämpfungsflüssigkeit über die Sinterringscheibe 19, den Ringkanal 21 und die

Bohrung 22 in geringem Umfang in den Außenzylinder umgepumpt wird. Auf diese Weise wird der Dichtlippenring 17 ständig von Dämpfungsflüssigkeit beaufschlagt, so daß über ihn kein Druckgas nach außen entweichen kann. Zugleich wird über die vorerwähnte, beim jeweiligen Ausfahrhub der Kolbenstange 7 auftretende Pumpwirkung die Schmierung des Führungsringes 8 für die Kolbenstange 7 verbessert. Der Arbeitszylinder 11 bleibt in seinem oberen wie unteren Teil gasblasenfrei, wodurch der Schwingungsdämpfer bzw. sein Arbeitskolben 9 seine volle Dämpfungswirkung beibehält. Das gilt gleichermaßen auch für das Bodenventil, das zufolge seiner in beiden Richtungen unterschiedlichen Dämpfungswirkung dem bei der jeweiligen Einfahrbewegung der Kolbenstange 7 erfolgenden Flüssigkeitsdurchlaß wesentlich größeren Widerstand entgegensetzt als in der umgekehrten Strömungsrichtung. Wie sich gezeigt hat, wird die Sinterringscheibe 19 jeweils nur während der jeweiligen Ausfahrbewegungen der Kolbenstange 7 vom Gas bzw. der Flüssigkeit durchströmt, also jeweils in radialer Richtung nach außen zum Ringkanal 21 hin, der im Bereich der Sinterringscheibe 19 praktisch stets mit Dämpfungsflüssigkeit gefüllt ist, da die Rücklaufbohrung 22 gleichsam als Überlauf wirkt, also einen entsprechenden Flüssigkeitsvorrat in der Aufnahmetasche 15' zurückhält.

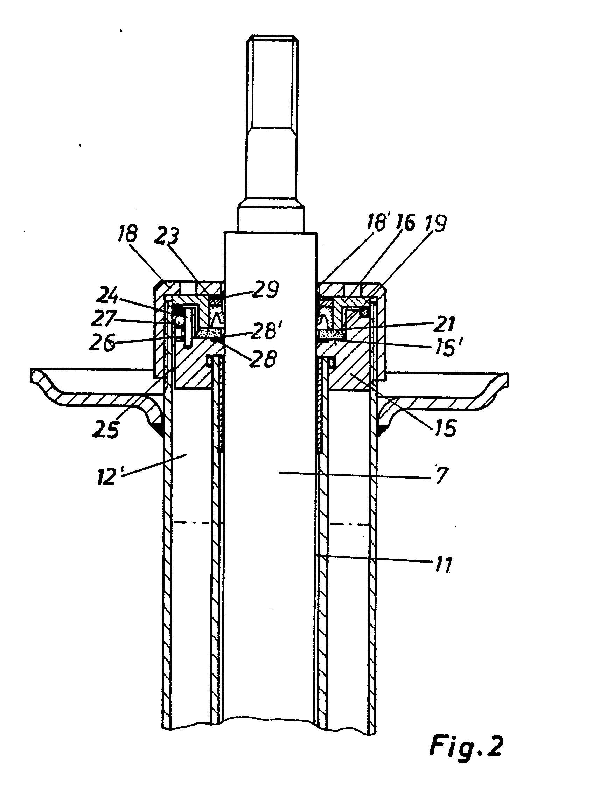

Der in Fig. 2 lediglich in seinem oberen Bereich dargestellte Zweirohr-Schwingungsdämpfer ist von grundsätzlich gleicher Bauart und Wirkungsweise wie der in Fig. 1 abgebildete. Die übereinstimmenden Teile sind daher auch mit den gleichen Bezugszeichen versehen. Unterschiedlich ist hier aber, daß die den Ringkanal 21 mit dem Druckgasraum 12' verbindende axiale Rücklaufbohrung aus zwei in der Verschlußpaketscheibe 15 gegeneinander versetzt angeordneten Längskanälen 24,25 besteht, die über eine mit einer eingesetzten Lochblende 26 von etwa 0,2 mm Öffnungsdurchmesser versehene Querbohrung 27 miteinander verbunden sind. Der obere Längskanal 24 ist dabei als Sackbohrung ausgeführt, während der untere in den Gasraum 12' des Außenzylinders einmündende Längskanal 25 als Nut oder Abflachung am Außenumfang der Verschlußpaketscheibe 15 ausgebildet ist. Auf diese Weise wird sichergestellt, daß die bei den jeweiligen Ausfahrbewegungen der Kolbenstange 7 umgepumpte Ölmenge aus der Rücklaufbohrung nicht frei in den Gasraum 12' abtropft, sondern aus dem Längskanal 25 kommend an der Innenwandung des Außenzylinderrohres 3 herunterrinnt. Dadurch wird auch an dieser Stelle die andernfalls durch das freie Heruntertropfen des Dämpferöls bedingte Schaumbildungsgefahr verringert bzw. beseitigt.

Schließlich sei noch darauf hingewiesen, daß in beiden Ausführungsbeispielen in die Aufnahmetasche 15' der Verschlußpaketscheibe 15 unterhalb des Innenumfanges der Sinterringscheibe 19 ein Abstreiferring 28 mit nach oben weisender, an der Kolbenstange 7 anliegender Abstreiferlippe eingelegt ist. Dieser vorzugsweise aus Polytetrafluoräthylen bestehende Abstreiferring 28 verhindert einen entsprechenden Ölrückfluß entlang dem Kolbenstangen-Außenumfang in Richtung zur Arbeitskammer 11. Er stellt also sicher, daß die die Sinterringscheibe 19 enthaltende Aufnahmetasche 15' ständig mit Dämpferöl gefüllt bleibt, was insbesondere bei höheren Gasdrücken im Raum 12' von Bedeutung ist. Dadurch kann die Sinterringscheibe 19, da sie ständig von dem in der Aufnahmetasche 15' befindlichen Dämpferöl umgeben ist, auch bei höheren Gasdrücken ihre angestrebte einsinnige Entlüftungsfunktion voll beibehalten. Ein entsprechend dem Ring 28 beschaffener Abstreiferring 29 befindet sich auch unterhalb der Kolbenstangendurchtrittsbohrung 18' zwischen der Verschlußkappe 18 und dem Stützring 23. Diesem Abstreiferring 29 fällt hier aber lediglich die Aufgabe zu, als Schmutzabweiser zu dienen.

0016954

## Patentansprüche:

1. Hydropneumatischer Zweirohr-Schwingungsdämpfer, insbesondere als Vorderachsbein für Kraftfahrzeuge, mit einem Dämpfungsflüssigkeit enthaltenden Innenzylinder, einem damit über ein Bodenventil verbundenen, teilweise mit Dämpfungsflüssigkeit und Druckgas gefüllten Außenzylinder, einer im Innenzylinder geführten Kolbenstange mit daran vorhandenem Arbeitskolben und einem an den oberen Zylinderrohrenden vorgesehenen Verschlußpaket für den Kolbenstangendurchtritt mit Kolbenstangenabdichtung und einer darunter angeordneten Entlüftungseinrichtung mit zum oberen Ende des Außenzylinders führendem Entlüftungskanal, d a d u r c h g e k e n n z e i c h n e t, daß die Entlüftungseinrichtung aus einem gas-und flüssigkeitsdurchlässigen Porenkörper (19) mit hinreichendem Durchflußwiderstand besteht.

2. Schwingungsdämpfer nach Anspruch 1, d a d u r c h g e k e n n z e i c h n e t, daß der Porenkörper (19) aus Sinterwerkstoff, insbesondere Sintereisen besteht.

3. Schwingungsdämpfer nach den Ansprüchen 1 und 2, d a - d u r c h  g e k e n n z e i c h n e t, daß der Poren- körper aus einer Sinterringscheibe (19) besteht, die in eine unmittelbar unterhalb der Kolbenstangenabdichtung (19) gelegene Aufnahmetasche (15') einer unteren Verschlußpaketscheibe (15) eingelegt ist, die die oberen Zylindergehäuserohrenden miteinander verbindet und den Entlüftungskanal in Form einer axialen Rücklaufbohrung (22) enthält, die oberhalb der Sinterringscheibe (19) von der Aufnahmetasche (15') abzweigt.

4. Schwingungsdämpfer nach den Ansprüchen 1 bis 3, d a - d u r c h  g e k e n n z e i c h n e t, daß in ge- ringem Abstand oberhalb der die Sinterringscheibe (19) aufnehmenden Verschlußpaketscheibe (15) ein L-förmig profilierter Verschlußring (16) angeordnet ist, der außen über einen Dichtungsring (20) auf der Verschlußpaketscheibe (15) aufliegt und mit seinem inneren, axial nach unten abgewinkelten Teil (16') einen die Kolbenstangenabdichtung bildenden Dichtlip- penring (17) umgreift und stirnseitig auf der Sinterringscheibe (19) aufliegt.

5. Schwingungsdämpfer nach den Ansprüchen 1 bis 4, d a - d u r c h  g e k e n n z e i c h n e t, daß oberhalb

des L-förmig profilierten Verschlußringes (16) eine letzteren sowie das obere Ende des Außenzylinderrohres (3) umgreifende und damit verschraubte Verschlußkappe (18) vorgesehen ist.

6. Schwingungsdämpfer nach den Ansprüchen 1 b is 5, d a - d u r c h g e k e n n z e i c h n e t, daß in das obere Ende des Innenzylinderrohres (5'') unmittelbar unterhalb der Verschlußpaketscheibe (15) eine Führungs- büchse (8) für die Kolbenstange (7) eingesetzt ist.

7. Schwingungsdämpfer nach Anspruch 3, d a d u r c h g e k e n n z e i c h n e t, daß die axiale Rücklauf- bohrung aus zwei in der Verschlußpaketscheibe (15) gegeneinander versetzt angeordneten Längskanälen (24,25) besteht, die über eine mit einer Lochblende (26) versehene Querbohrung (27) miteinander verbunden sind, wobei der obere Längskanal (24) als Sackbohrung ausgeführt und der untere, in den Gasraum (12') des Außenzylinders einmündende Längskanal (25) als Nut oder Abflachung am Außenumfang der Verschlußpaketscheibe (15) ausgebildet ist.

8. Schwingungsdämpfer nach Anpruch 3, d a d u r c h g e - k e n n z e i c h n e t, daß in die Aufnahmetasche (15') der Verschlußpaketscheibe (15) unterhalb des Innenum-

- 15 -

0016954

fanges der Sinterringscheibe (19) ein Abstreiferring (28) mit nach oben weisender, an der Kolbenstange (7) anliegender Abstreiferlippe (28') vorgesehen ist.

Fig.1

Fig.2

**Europäisches Patentamt**

**EUROPÄISCHER RECHERCHENBERICHT**

| Kategorie | EINSCHLÄGIGE DOKUMENTE Kennzeichnung des Dokuments mit Angabe, soweit erforderlich, der maßgeblichen Teile | betrifft Anspruch |
|---|---|---|
| | US - A - 3 367 455 (P.L. PANIGATTI) * Spalte 2, Zeilen 63,64; Abbildung 1 * | 1,2 |
| | FR - A - 2 343 166 (BOGE GmbH) * Seiten 5-11; Abbildungen 1-3 * | 1,3,6, 7 |
| | FR - A - 2 381 212 (HONDA) * Abbildungen 2,7; Seiten 5-12 * | 1,3-8 |
| | FR - A - 2 052 622 (FICHTEL-SACHS AG) * Abbildung 1; Seiten 1-3 * | 1,3-5, 7,8 |
| A | FR - A - 2 384 998 (FICHTEL-SACHS AG) | |
| A | FR - A - 2 152 891 (FICHTEL-SACHS AG) | |
| A | US - A - 2 819 064 (L.J. PERAS) | |
| A | FR - A - 1 367 757 (R. BOSCH GmbH) | |

**KLASSIFIKATION DER ANMELDUNG (Int.Cl. 3)**

F 16 F 9/36

**RECHERCHIERTE SACHGEBIETE (Int. Cl. 3)**

F 16 F
F 16 J

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentansprüche erstellt.

| Recherchenort: Den Haag | Abschlußdatum der Recherche 06-06-1980 | Prüfer CINQUANTINI |
|---|---|---|